(19) Europäisches Patentamt
European Patent Office
Office européen des brevets

(11) Veröffentlichungsnummer: **0 146 136**
**B1**

(12) **EUROPÄISCHE PATENTSCHRIFT**

(45) Veröffentlichungstag der Patentschrift: **16.05.90**

(51) Int. Cl.[5]: **G 02 B 5/23,** C 07 D 498/10 // G03C1/72

(21) Anmeldenummer: **84115603.7**

(22) Anmeldetag: **17.12.84**

(60) **Verbunden mit 85900064.8/0165270 (europäische Anmeldenummer/Veröffentlichungsnummer) durch Entscheidung vom 05.03.87.**

(54) **Optisches Element mit phototropem Überzug.**

(30) Priorität: **16.12.83 DE 3345639**

(43) Veröffentlichungstag der Anmeldung:
**26.06.85 Patentblatt 85/26**

(45) Bekanntmachung des Hinweises auf die Patenterteilung:
**16.05.90 Patentblatt 90/20**

(84) Benannte Vertragsstaaten:
**AT BE CH DE FR GB IT LI LU NL SE**

(56) Entgegenhaltungen:

| | |
|---|---|
| EP-A-0 082 115 | GB-A-1 092 124 |
| DE-A-1 927 849 | GB-A-1 105 825 |
| DE-A-2 746 131 | GB-A-1 146 309 |
| DE-A-2 826 255 | GB-A-2 029 410 |
| FR-A-1 391 063 | US-A-3 397 023 |
| GB-A-1 092 123 | US-A-3 409 556 |

**Die Akte enthält technische Angaben, die nach dem Eingang der Anmeldung eingereicht wurden und die nicht in dieser Patentschrift enthalten sind.**

(73) Patentinhaber: **Optische Werke G. Rodenstock
Isartalstrasse 43
D-8000 München 5 (DE)**

(72) Erfinder: **Melzig, Manfred, Dr.
Sonnenstrasse 11
D-8031 Wessling (DE)**
Erfinder: **Martinuzzi, Guiseppe
Wendelsteiner Strasse 4
D-8031 Eichenau (DE)**
Erfinder: **Effer, Erhard
Ministerhügel 6
D-8134 Pöcking (DE)**

(74) Vertreter: **Münich, Wilhelm, Dr. et al
Kanzlei Münich, Steinmann, Schiller
Willibaldstrasse 36/38
D-8000 München 21 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung bezieht sich auf ein optisches Element mit einem phototropen Überzug, wie es beispielsweise als Sonnenschutz-Brillenglas verwendet werden kann.

Optische Elemente mit phototropen Überzügen, d.h. Überzügen, deren Einfärbung sich entsprechend der Umgebungsbeleuchtung in Intensität und Farbeindruck ändert, sind beispielsweise aus der DE—A 29 36 255 bekannt.

In dieser Druckschrift sind zwei Wege beschrieben, wie ein phototroper Überzug auf einem optischen Element aufgebracht werden kann. Nach dem einen Verfahren wird eine Mischung aus der phototropen Substanz und einem optisch klaren Kunststoffmaterial, wie es auch für Kunststofflinsen verwendet wird, hergestellt und diese Mischung auf dem optischen Element aufgebracht. Bei dem anderen beschriebenen Verfahren wird die phototrope Substanz zunächst in einem Lösungsmittel gelöst; anschließend wird das optische Element mehrere Stunden in die Lösung eingetaucht.

Nachteilig bei den gemäß der DE—A 29 36 255 aufgebrachten Überzügen ist, daß die Überzüge entweder langwierig herzustellen sind, schlecht haften und/oder die optische Qualität des optischen Elements herabgesetzt wird.

Weiterhin ist es aus der GB—A 1 105 825 bekannt, photochrome Substanzen in thermoplastische Silane einzulagern.

Der Erfindung liegt die Aufgabe zugrunde, ein optisches Element mit einem eine oder mehrere phototrope organische Substanz(en) enthaltenden durchsichtigen Überzug derart weiterzubilden, daß der einfach aufbringbare Überzug gut haftet und die optische Qualität des Elements nicht verschlechtert.

Diese Aufgabe wird erfindungsgemäß dadurch gelöst, daß der Überzug aus Polysiloxanschutzlack besteht. Der Schutzlack kann dabei auf die Vorder- und Rückseite des optischen Elements oder nur auf eine Seite aufgebracht sein.

Polysiloxanlacke werden üblicherweise als Schutzlacke zum Schutz von Kunststoffgläsern gegen mechanische und/oder sonstige Einwirkungen verwendet. Hierdurch ergibt sich der Vorteil, daß zum Aufbringen des phototropen Überzugs bei Kunststoffgläsern kein zusätzlicher Arbeitsgang erforderlich ist; vielmehr erhält das optische Element, beispielsweise ein Brillenglas, den phototropen Überzug durch das Aufbringen des beispielsweise zum Schutz gegen äußere Einwirkungen erforderlichen Schutzlacks.

Der erfindungsgemäß verwendete Polysiloxanlack hat vor allem aber folgenden Vorteil:

Die Eigenschaften phototroper Verbindungen, wie beispielsweise Sättigungstransmission, Kinetik der Eindunkelung und Aufhellung, Temperaturabhängigkeit und Lebensdauer des phototropen Effekts, Transmission im aufgehellten Zustand und auch der Farbeindruck hängen in starkem Maße von der chemischen Umgebung der phototropen Verbindungen, d.h. der Matrix ab, in die phototrope Substanzen eingebracht sind.

Damit ist es erfindungsgemäß möglich, durch Variation der phototropen Substanzen und/oder des Polysiloxanschutzlacks, in den die phototropen Verbindungen eingebracht sind, verschiedene Einfärbungen und/oder eine unterschiedliche Kinetik der Aufhellung und Verdunklung zu erzielen.

Überraschenderweise haben dabei viele phototrope Substanzen, wenn sie erfindungsgemäß in einen Polysiloxanlack eingebracht werden, eine größere Lebensdauer hinsichtlich des phototropen Effekts und eine schnellere Kinetik, als beim Einbringen beispielsweise in das Kunststoffmaterial des optischen Elements.

Weiterbildungen der Erfindung sind in den Unteransprüchen angegeben.

Im Anspruch 2 sind verschiedene vorteilhafte Polysiloxane, nämlich Epoxy-, Acryloyl-, Alkoxy- oder Alkyalkoxysiloxan angegeben.

Durch die Wahl unterschiedlicher Lacksorten sowie durch die verschiedenen im Anspruch 3 angegebenen Einbringverfahren ist es möglich, bei gleicher phototroper Verbindung ein unterschiedliches Ansprechverhalten und sogar einen unterschiedlichen Farbeindruck zu erzielen.

Darüberhinaus ist es möglich, beispielsweise durch Härtung des Lacks mit ionisierender Strahlung, in Gegenwart von Initiatorsystemen oder durch Photoinitiatoren sowie durch Wärmeeinwirkung bzw. UV-Strahlung die Matrix der phototropen Verbindung und damit die Eigenschaften der phototropen Verbindung, beispielsweise hinsichtlich der Kinetik der Einfärbung, Lebensdauer, Sättigungstransmission, Farbe etc. zu beeinflussen.

Insbesondere ist es gemäß Anspruch 4 möglich, dem Polysiloxanlack Stabilisatoren beizufügen, die eine photooxidative und/oder eine photolytische Alterung bzw. Zerstörung der in den Lack und/oder das optische Element eingebrachte phototropen Verbindungen beispielsweise durch den Luftsauerstoff und/oder UV-Strahlen verhindern oder zumindest hinauszögern. Die Stabilisatoren können dabei UV-Absorber der üblichen Art, wie Benzophenon-, Benzotriazol-Acrylsäurederivate sein. Ferner können beispielsweie die in der DE—A—33 10 388 beschriebenen Stabilisatoren verwendet werden.

Der erfindungsgemäß ausgebildete Überzug kann sowohl bei optischen Elementen aus einem Kunststoffmaterial als auch bei Elementen aus Silikatglas eingesetzt werden (Anspruch 5).

Natürlich können als phototrope bzw. photochrome Verbindungen bzw. Substanzen die verschiedensten Verbindungen verwendet werden, wie sie beispielsweise in den US-PSen 3 562 172 und 3 578 602 oder in der DE—A 29 36 255 beschrieben sind. Besonders vorteilhaft hinsichtlich Temperaturstabilität und Lebensdauer sind jedoch die im Anspruch 6 angegebenen phototropen Verbindungen.

Gemäß Anspruch 7 kann der Lack mehrere Schichten aufweisen, deren phototrope Färbung unterschiedlich sein kann. Hierdurch können Mischfarben und/oder farbige Muster erzeugt werden. Zusätzlich können auch in das optische Element ein oder mehrere phototrope Substanzen eingebracht sein.

Erfindungsgemäß ist nämlich erkannt worden, daß zum Erzielen beispielsweise einer kosmetischen ansprechenden neutral-grauen oder braunen Einfärbung phototroper Brillengläser mindestens zwei verschiedene Substanzen erforderlich sind, deren physikalische Eigenschaften so aufeinander abgestimmt sein müssen, daß während der Aufhell- bzw, Eindunkelungsphase keine Farbunterschiede sichtbar werden. Diese Anpassung des Gesamtsystems an die gewünschte Eigenschaften kann — wie ebenfalls erfindungsgemäß erkannt worden ist — durch geeignete Wahl und/oder Variation der jeweiligen Matrix, in die die verschiedenen phototropen Substanzen eingebettet sind, erfolgen.

Das optische Element und/oder der Überzug können ferner zusätzlich in an sich bekannter Weise nichtphototrop eingefärbt sein. Beispielsweise kann, wenn das optische Element ein Brillenglas ist, das Glas nicht optisch klar, sondern mit einer bestimmten "Anfangsabsorption" versehen sein.

Natürlich können sowohl die phototrope als auch die nichtphototrope Einfärbung homogen oder partiell verlaufend sein. Insbesondere bei Sonnenschutzgläsern kann die Einfärbung dabei graduell verlaufend sein und zwar beispielsweise so, daß die Einfärbung vom oberen Rand des Glases nach unten hin abnimmt. Bei photroper graduell verlaufender Einfärbung können die phototropen bzw. photochromen Substanzen entweder in dem Überzug oder in dem optischen Element selbst graduell verlaufend eingebracht sein.

Die Erfindung wird nachstehend anhand von Vergleichen mit optischen Elementen, deren phototrope Wirkung auf herkömmliche Weise erzeugt worden ist, näher erläutert.

### Vergleich 1

Planglasscheiben aus CR 39 mit einer Dicke von 2 mm sind mit der aus der US—A—2 953 454 bekannten phototropen Substanz 1,3,3-Trimethyl-8'-methoxy-6'nitro-2'H-1'benzopyran einmal in konventioneller Tauchfärbung (analog DE—A—2 347 018) und einmal mit einem erfindungsgemäßen Überzug auf Polysiloxanbasis mit einer Schichtdicke von ca 3 µm phototrop eingefärbt worden.

Die nachstehende Tabelle gibt die Veränderung der optischen Dichte OD ($V_\lambda$-bewertet) sowie die Halbwertszeit HWZ der Aufhellung bei verschiedenen Temperaturen nach einer 15-minütigen Belichtung mit einer 150 W XBO-Lampe mit einer Beleuchtungsstärke von 50 klux wieder:

| | Tauchfärbung | | Phototroper Lack | |
|---|---|---|---|---|
| Temperatur | OD | HWZ | OD | HWZ |
| 14°C | 0.172 | >240 min | 0.261 | 30 min |
| 23°C | 0.202 | >80 min | 0.299 | 10 min |
| 30°C | 0.146 | 26 min | 0.222 | 3,5 min |

Trotz kleinerer Veränderungen der optischen Dichte des mit konventioneller Tauchfärbung hergestellten optischen Elements benötigt die phototrope Substanz im Falle der üblichen Diffusionsfärbung des CR 39-Materials über acht mal solange, um auf die halbe Verdunkelung aufzuhellen als bei der erfindungsgemäßen Einbringung.

### Vergleich 2

Planglasscheiben aus CR 39 mit einer Dicke von 2 mm sind mit der aus der US—A 3 578 602 bekannten phototropen Substanz 1,3,3-Trimethyl-Spiro(indolin-2, 3'naphth(2,1-6)(1,4)-oxazin) einmal in konventioneller Tauchfärbung (analog US—A—3 578 602) und einmal mit einem erfindungsgemäßen Überzug auf Polysiloxanbasis mit einer Schichtdikke von ca 3 µm phototrop eingefärbt worden.

Die nachstehende Tabelle gibt die Verdunkelung und Aufhellung bei 5°C wieder. Dabei wurde während einer 15-minütigen Belichtung eine Beleuchtungsstärke von 50 klux eingehalten. Die angegebenen Transmissionswerte sind $V_\lambda$-bewertet.

| Verdunkelung (Belichtungszeit) | Transmission bei Tauchfärbung | Transmission bei phototroper Lack |
|---|---|---|
| 0 | 92% | 88,5% |
| 3Ø sec | 63% | 45% |
| 1 min | 60% | 36% |
| <2 min | 51% | 32% |
| 5 min | 42% | 29,5% |
| 15 min | 35% | 28,5% |

| Aufhellung (Aufhellzeit) | Transmission bei Tauchfärbung | Transmission bei phototroper Lack |
|---|---|---|
| 30 sec | 40% | 45% |
| 1 min | 43,5% | 56,5% |
| 2 min | 47% | 67,5% |
| 5 min | 55,5% | 78,5% |
| 15 min | 67,5% | >85% |

In einer Minute werden bei der erfindungsgemäßen Einfärbung, bei der die phototrope Substanz in einen Lack eingebracht wird, über 94% der maximalen Verdunkelung erreicht, bei konventioneller Färbetechnik dagegen nur 56%. Auch die Aufhellung ist bedeutend schneller, eine Aufhellung auf 70% der maximalen Transmission wird bereits in 2,5 Minuten statt erst in 20 Minuten erreicht.

Der Vorteil der erfindungsgemäßen Einbringung phototroper Substanzen liegt darin, daß bereits bekannte phototrope Verbindungen als Sonnenschutzfilter überhaupt oder auch bei tiefen Temperaturen Verwendung finden können.

**Patentansprüche**

1. Optisches Element mit einem eine oder mehrere phototrope organische Substanz(en) enthaltenden durchsichtigen Überzug, dadurch gekennzeichnet, daß der Überzug aus Polysiloxanschutzlack besteht.

2. Element nach Anspruch 1, dadurch gekennzeichnet, daß das Polysiloxan ein Epoxy-, Acryloyl-, Alkoxy- oder Alkyalkoxysiloxan ist.

3. Element nach Anspruch 1 oder 2, dadurch gekennzeichnet, daß der Überzug durch Einbringen der phototropen organischen Substanz(en) in den Lack in Lösung und/oder nach dessen vollständigem oder teilweisen Aushärten hergestellt worden ist.

4. Element nach einem der Ansprüche 1 bis 3, dadurch gekennzeichnet, daß der Lack einen oder mehrere Stabilisatoren aufweist, die eine photolytische und/oder eine photooxidative Zerstörung des phototropen Substanz(en) verhindern oder hemmen.

5. Element nach einem der Ansprüche 1 bis 4, dadurch gekennzeichnet, daß das optische Element aus Diethylenglykol-bis-allylcarbonat, Polycarbonat, Polymethacrylat oder Silikatglas besteht.

6. Element nach einem der Ansprüche 1 bis 5, dadurch gekennzeichnet, daß die organische(n) phototrope(n) Substanz(en) ausgewählt ist (sind) aus der Gruppe bestehend aus 1,3,3-Trimethyl-8'-methoxy-6'-nitro-2'H-1'-benzopyran sowie Substanzen der allgemeinen Formel

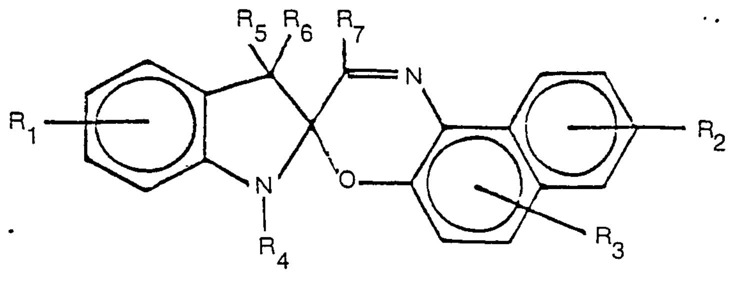

ist, wobei

$R_1$, $R_2$, $R_3$ aus der Reihe —H, —CN, —SCN, —$NO_2$, —X, —$CH_2X$, —$CX_3$ (X = Halogen), —OR, —SR, —COR, —COOR mit X = Halogen und R = H, Alkyl mit bis zu 8 C-Atomen, Aryl oder Heteroaryl, ausgewählt sind

und $R_4$, $R_5$, $R_6$, $R_7$ jeweils die Bedeutung —H, —R, —$CH_2R$, —$NH_2R$, —$NR_2$, —OR, —SR mit R = Alkylrest mit bis zu 8 C-Atomen, Aryl oder Heteroaryl besitzen wobei mindestens einer der Reste $R_4$, $R_5$ oder $R_6$ nicht Methyl ist, falls $R_7$ = H ist.

7. Element nach einem der Ansprüche 1 bis 6, dadurch gekennzeichnet, daß der Überzug mehrere Lackschichten mit unterschiedlicher phototroper Färbung aufweist.

8. Verwendung eines optischen Elements nach einem der Ansprüche 1 bis 8 als Sonnenschutz-Brillenglas.

**Revendications**

1. Elément optique revêtu d'un couche transparente, qui contient une ou plusieurs substances organiques phototropiques, élément caractérisé en ce que la couche de revêtement est composée d'un vernis protecteur en polysiloxane.

2. Elément optique selon la revendication 1, caractérisé en ce que le polysiloxane est un époxy-, acryloyl-, alcoxy- ou alkylalcoxysiloxane.

3. Elément selon la revendication 1 ou 2, caractérisé en ce que la couche de revêtement a été obtenue par apport, dans le vernis, de la ou des substances organiques phototropiques en solution et/ou après durcissement complet ou partiel de ce vernis.

4. Elément selon l'une des revendications 1 à 3, caractérisé en ce que le vernis contient un ou plusieurs stabilisants, qui empèchent ou inhibent la destruction de la ou des substances phototropiques par photolyse et/ou photo-oxydation.

5. Elément selon l'une des revendications 1 à 4, caractérisé en ce que cet élément optique est un bis(allylcarbonate) de diéthylèneglycol, un polycarbonate, un polyméthacrylate ou un verre au silicate.

6. Elément selon l'une des revendications 1 à 5, caractérisé en ce que la ou les substance(s) organique(s) phototropique(s) est ou sont choisie(s) parmi le 1,3,3-triméthyl-8'-méthoxy-6'-nitro-2'H-1'-benzopyranne ou les substances ayant la formule générale

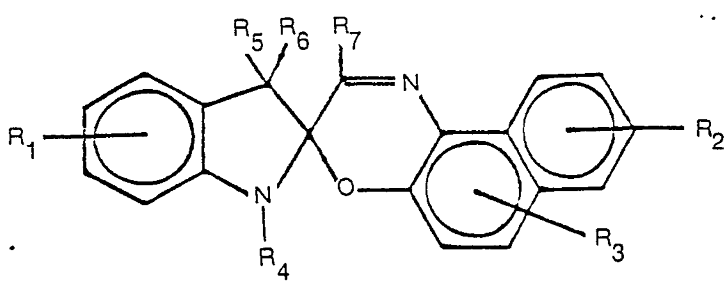

où $R_1$, $R_2$, $R_3$ sont choisis parmi —H, un groupe —CN, —SCN, —$NO_2$, —X, —$CH_2X$, —$CX_3$ (X = halogène), —OR, —SR, —COR, —COOR (avec X = halogène et R représentant H, un groupe alkyle ayant jusqu'à 8 atomes de C, un groupe aryle ou hétéroaryle)

et $R_4$, $R_5$, $R_6$, $R_7$ ont comme significations —H, —R, —$CH_2R$, —$NH_2R$, —$NR_2$, —OR, —SR, R étant un radical alkyle contenant jusqu'à 8 atomes de C, un groupe aryle ou hétéroalkyle, et l'un au moins des radicaux $R_4$, $R_5$ ou $R_6$ ne représentant pas un groupe méthyle, si $R_7$ représente H.

7. Elément selon l'une des revendications 1 à 6, caractérisé en ce que le revêtement présente plusieurs couches de vernis à coloration phototropique différente.

8. Utilisation d'un élément optique selon l'une des revendications 1 à 7 comme verre pour lunettes de protection contre les effets du soleil (lunettes de soleil).

**Claims**

1. Optical element with a translucent coating containing one or more photochromic, organic substance(s), characterised by the fact that the coating comprises a polysiloxane protective lacquer.

2. Element according to claim 1, characterised by the fact that the polysiloxane is an epoxy, acryloyl, alkoxy or alkyakoxy siloxane.

3. Element according to claim 1 or 2, characterised by the fact that the coating has been manufactured by introduction of the photochromic, organic substance(s) into the lacquer in solution and/or after its complete or partial hardening.

4. Element according to any of the claims 1 to 3, characterised by the fact that the lacquer comprises one or more stabilisers which prevent or inhibit a photolytic and/or a photooxidising destruction of the photochromic substance(s).

5. Element according to any of the claims 1 to 4, characterised by the fact that the optical element comprises diethylene glycol bis allylcarbonate, polycarbonate, polymethacrylate or silicate glass.

6. Element according to any of the claims 1 to 5, characterised by the fact that the organic photochromic substance(s) is/are selected from the group consisting of 1,3,3-trimethyl-8'-methoxy-6'-nitro-2'H-1'-benzopyrane and of substances of the general formula

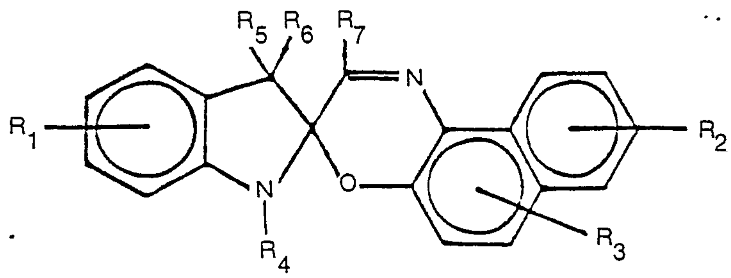

where

$R_1$, $R_2$, $R_3$ are selected from the series —H, —CN, —SCN, —$NO_2$, —X, —$CH_2X$, —$CX_3$ (X = halogen), —OR, —SR, —COR, —COOR with X = halogen and R = H, alkyl with up to 8 C atome, aryl or heteroaryl

and $R_4$, $R_5$, $R_6$, $R_7$ in each case have the meaning —H, —R, —$CH_2R$, —$NH_2R$, —$NR_2$, —OR, —SR with R = alkyl residue with up to 8 C atoms, aryl or heteroaryl where at least one of the residues $R_4$, $R_5$, or $R_6$ is not methyl if $R_7$ = H.

7. Element according to any of the claims 1 to 6, characterised by the fact that the coating possesses several lacquer layers with different photochromic tinting.

8. Use of an optical element according to any of the claims 1 to 8 as a sun-protection spectacle lens.